# FASCICULE DE BREVET EUROPEEN

(11) **EP 2 723 658 B1**
(45) Date de publication et mention de la délivrance du brevet: **10.08.2016**
(21) Numéro de dépôt: 12730896.3
(22) Date de dépôt: 22.06.2012
(51) Int. Cl.: B65G 45/12, B65G 45/16

(54) **DISPOSITIF RACLEUR POUR BANDE TRANSPORTEUSE ET PROCEDE DE FABRICATION CORRESPONDANT**
SCHABVORRICHTUNG FÜR EIN TRANSPORTBAND UND ENTSPRECHENDES HERSTELLUNGSVERFAHREN
SCRAPING DEVICE FOR A TRANSPORTING BELT AND CORRESPONDING MANUFACTURING METHOD

(30) Priorité: 22.06.2011 FR 1155496
(43) Date de publication de la demande: 30.04.2014
(73) Titulaire: Brunone, René, 27950 Saint Marcel (FR)
(72) Inventeur: Brunone, René, 27950 Saint Marcel (FR)
(74) Mandataire: Blot, Philippe Robert Emile
(86) Numéro de dépôt international: PCT/EP2012/062057
(87) Numéro de publication internationale: WO 2012/175655

(56) Documents cités:
- EP-A1- 0 338 118
- EP-A1- 0 566 486
- EP-A1- 0 637 560
- EP-A1- 0 891 934
- EP-A2- 2 226 275
- AU-B1- 2010 201 913
- DE-A1- 4 407 657
- DE-A1- 19 508 090
- DE-U1- 9 006 407
- GB-A- 2 338 944
- US-A- 5 339 947
- US-A1- 2002 079 196
- US-A1- 2007 029 169
- US-B1- 7 004 304

## Description

L'invention concerne en général un dispositif racleur pour bande transporteuse, et le procédé de fabrication correspondant.

Plus précisément, l'invention concerne selon un premier aspect un dispositif racleur pour bande transporteuse circulant longitudinalement d'une direction amont vers une direction aval, le dispositif étant du type comprenant :
- une structure porteuse ;
- au moins un organe racleur délimité vers l'amont et l'aval par des côtés amont et aval ;
- un matériau élastique surmoulé sur l'organe racleur et liant l'organe racleur à la structure porteuse.

Un dispositif de ce type selon le préambule de la revendication 1 est décrit dans EP 0 891 934. Le dispositif comporte plusieurs organes racleurs, solidarisés les uns aux autres par le matériau élastique. Celui-ci est surmoulé sur le côté aval des différents organes racleurs. Une bavette en caoutchouc est adhérisé au côté amont des différents organes racleurs. Elle permet l'évacuation des résidus détachés de la bande transporteuse par les organes racleurs.

Le sous-ensemble formé des organes racleurs et du matériau élastique est monté entre deux plaques de support de la structure porteuse.

Un tel dispositif racleur a une structure complexe, et est coûteux à fabriquer.

Dans ce contexte, l'invention vise à proposer un dispositif racleur qui soit plus simple et moins coûteux.

A cette fin, l'invention porte sur un dispositif racleur du type précité, caractérisé en ce que le côté amont de l'organe racleur est couvert par le matériau élastique surmoulé.

Ainsi, c'est le matériau élastique surmoulé qui définit la géométrie du dispositif racleur du côté amont du ou des organes racleurs. L'opération de surmoulage permet de conférer au matériau élastique du côté amont de l'organe racleur une forme adaptée pour l'évacuation des résidus séparés de la bande transporteuse par le ou les organes racleurs. Le matériau élastique surmoulé remplace donc la bavette de caoutchouc prévue dans EP 0 891 934. Cette bavette de caoutchouc n'est plus nécessaire.

Ainsi, le dispositif de l'invention est dépourvu d'un organe supplémentaire prévu pour faire office de bavette de guidage des résidus séparés de la bande transporteuse, cette fonction étant assurée par le matériau élastique surmoulé du côté amont de l'organe racleur.

La structure du dispositif racleur est ainsi beaucoup plus simple, puisque la pièce en caoutchouc rapporté sur les organes racleurs est supprimée. Le dispositif est plus économique à fabriquer, puisque les opérations nécessaires pour adhériser la bavette sur les organes racleurs sont supprimées. Le matériau élastique faisant fonction de bavette est surmoulé avec le reste du matériau élastique, le reste du matériau élastique étant prévu pour solidariser les différents organes racleurs les uns aux autres et lier ce ou ces organes racleurs à la structure porteuse.

Le matériau élastique couvre la plus grande partie du côté amont de l'organe racleur.

Le dispositif comporte comme indiqué ci-dessus au moins un organe racleur, et de préférence une pluralité d'organes racleurs. Les organes racleurs sont disposés les uns à côté des autres, selon une direction transversale. La direction transversale est perpendiculaire à la direction longitudinale, et correspond à la largeur de la bande.

La structure porteuse repose sur le sol, ou alternativement est rigidement fixée sur une autre structure. Cette autre structure est par exemple une structure de support et de guidage de la bande transporteuse, ou une structure comportant un dispositif de retournement de la bande transporteuse, ou toute autre structure adaptée.

De préférence, le matériau élastique surmoulé sur le côté amont de l'organe racleur présente une face amont libre, ladite face amont présentant une courbure autour d'un axe sensiblement horizontal et transversal. On entend par là que la face amont, quand elle est considérée en coupe dans des plans verticaux et longitudinaux, présente des sections courbes, c'est-à-dire non planes.

On confère ainsi à la face amont une géométrie adaptée pour l'évacuation des résidus détachés de la bande transporteuse par les organes racleurs.

Typiquement, la face amont présente au moins une zone inférieure et une zone supérieure située au-dessus de la zone inférieure, les zones inférieures et supérieures formant entre elles un angle compris entre 100° et 175°. De préférence, l'angle est compris entre 145° et 175°, et encore de préférence entre 160° et 175°.

Un tel angle est bien adapté pour guider les résidus séparés de la bande transporteuse par le ou les organes racleurs.

La zone inférieure s'étend de préférence sensiblement sur toute la largeur transversale de la face amont. De même, la zone supérieure s'étend de préférence sur toute la largeur transversale de la face amont. Par exemple, considéré en coupe dans un plan longitudinal et transversal, la zone supérieure est sensiblement plane et la zone inférieure est sensiblement plane. Elles se raccordent l'une à l'autre le long d'une ligne de jonction. Elles peuvent également se raccorder l'une à l'autre par le biais d'une zone de jonction courbe quand on la considère en coupe dans ledit plan longitudinal et transversal.

De préférence, l'organe racleur comporte une plaque de support noyée dans le matériau élastique, une plaquette d'usure et une liaison démontable de la plaquette d'usure à la plaque de support.

La plaquette d'usure est dans un matériau particulièrement résistant à l'abrasion, par exemple en carbure de tungstène ou en céramique.

Elle est destinée à venir porter contre la bande transporteuse et à racler la surface de la bande transporteuse tournée vers le dispositif racleur de manière à séparer de ladite bande les résidus restant attachés à la bande. La plaquette est une pièce d'usure, destinée à être changée périodiquement.

La plaque de support en revanche n'est pas destinée à être remplacée périodiquement, et est disposée de manière permanente dans le matériau élastique. La liaison démontable est de tout type adapté pour permettre le remplacement périodique de la plaquette d'usure. Par exemple, la liaison démontable comprend un écrou soudé à la plaque de support et une vis. La plaque de support et la plaquette d'usure présentent des orifices respectifs disposés en vis-à-vis. L'écrou est soudé autour de l'orifice de la plaque de support, d'un côté de la plaque opposé à la plaquette d'usure. La vis est engagée à travers les orifices en vis-à-vis, et est vissée dans l'écrou.

En variante, l'orifice de la plaque de support est taraudé, la vis étant vissée dans l'orifice taraudé.

Il est ainsi particulièrement simple de remplacer les plaquettes d'usure. Il n'est pas nécessaire de séparer les plaques de support du matériau élastique.

La maintenance du dispositif racleur est considérablement simplifiée.

De préférence, la plaque de support présente une courbure autour d'un axe sensiblement horizontal et transversal.

La plaque de support présente ainsi sensiblement la même forme que la face amont du matériau élastique surmoulé sur les organes racleurs.

Le vissage de la vis de fixation de la plaquette d'usure est plus facile.

Par ailleurs, une telle forme facilite le moulage du matériau élastique.

Selon l'invention, la structure porteuse comprend une âme de support, la matière élastique étant surmoulée autour de l'âme de support.

Ainsi, la structure du dispositif racleur est simplifiée. Il n'est pas nécessaire de prévoir une poutre transversale comportant plusieurs plaques fixées les unes aux autres par des vis, comme dans EP 0 891 934, et définissant entre elles une rainure de réception de l'organe racleur et du matériau élastique.

Le surmoulage de la matière plastique autour de l'âme de support et autour des organes racleurs est typiquement réalisé en une seule étape, dans un même moule.

Le montage des organes racleurs sur la structure porteuse est ainsi réalisé de manière très simple, lors du surmoulage du matériau élastique. Cette liaison est économique, rapide et facile à réaliser. Elle permet d'obtenir une liaison souple du ou des organes racleurs à la structure porteuse, bien adaptée au fonctionnement du dispositif racleur.

Par ailleurs, l'âme de support présente typiquement une forme arquée, de concavité tournée vers la direction amont. Une telle courbure permet une meilleure répartition de la pression du dispositif racleur sur la bande transporteuse, et favorise le raclage sur la partie centrale de la bande transporteuse.

Du fait que le matériau élastique est surmoulé sur l'âme de support, les organes racleurs, qui sont disposés transversalement les uns à côté des autres, adoptent automatiquement la même disposition et la même courbe que l'âme de support. Ils sont ainsi disposés de manière très simple et commode suivant la courbure recherchée.

Selon l'invention, la structure porteuse comporte deux sous-ensembles de support prévus pour être disposés transversalement de part et d'autre de la bande transporteuse, et deux liaisons démontables de deux parties d'extrémités de l'âme de support aux deux ensembles de support.

Ainsi, il est possible de monter et de démonter le sous-ensemble comportant l'âme de support, le matériau élastique et le ou les organes racleurs des deux ensembles de support, de manière simple et rapide. Ceci est particulièrement commode quand le dispositif racleur est disposé dans une zone encombrée, par exemple immédiatement à côté d'une trémie de chargement de la bande, ou d'une trémie d'évacuation des matériaux transportés sur la bande.

Chaque liaison démontable comporte par exemple une vis et un écrou, et/ou des ergots engagés dans des orifices. D'autres types de montage sont possibles.

De préférence, l'âme de support comporte une zone sensiblement transversale noyée dans le matériau élastique, et deux zones d'orientation sensiblement longitudinales, prolongeant la zone transversale de part et d'autre. Ces deux parties longitudinales s'étendent dans des plans verticaux et longitudinaux. Elles sont liées aux deux ensembles de support par lesdites liaisons démontables.

Selon l'invention, chaque ensemble de support comporte un montant fixe et un mécanisme prévu pour solliciter l'âme de support en rotation par rapport au montant autour d'un axe sensiblement transversal, le mécanisme comportant :
- une poutre rigidement liée à l'âme de support ;
- un feuillard lié à la poutre et s'enroulant autour de la poutre, le feuillard ayant deux parties d'extrémités opposées l'une à l'autre ;
- deux liaisons liant chacune une des deux parties d'extrémités du feuillard au montant, au moins une des deux liaisons étant réglable et étant agencée pour entraîner la poutre en rotation autour de l'axe central par rapport au montant par l'intermédiaire du feuillard.

Le feuillard est typiquement une feuille de métal, et plus précisément une bande de métal flexible.

Les liaisons sont agencées pour déplacer sélectivement le feuillard selon un mouvement correspondant à un glissement circonférentiel autour de l'axe transversal, dans un sens horaire ou dans un sens anti-horaire.

Le feuillard est par exemple agencé en forme de U, les deux parties d'extrémités du feuillard étant disposées verticalement l'une au-dessus de l'autre.

Les deux parties d'extrémités s'étendent par exemple sensiblement horizontalement.

De préférence, les deux liaisons des parties d'extrémités du feuillard sont réglables. En variante, l'une seulement des deux liaisons est réglable, et l'autre liaison est fixe. Chaque liaison réglable permet sélectivement de rapprocher ou d'éloigner du montant la partie d'extrémité correspondante du feuillard. Ce mouvement entraîne la poutre en rotation autour de l'axe transversal, dans un sens ou dans l'autre. Avantageusement, le mécanisme comprend :
- un membre tubulaire centré sur ledit axe transversal et disposé autour de la poutre ;
- un organe élastique liant la poutre et le membre tubulaire l'un à l'autre.

Le feuillard sollicite le membre tubulaire contre le montant, la poutre étant liée au montant seulement par l'intermédiaire du membre tubulaire et du feuillard.

Le membre tubulaire a typiquement une forme cylindrique. L'organe élastique est une pièce en un matériau élastique, par exemple en polyuréthane, disposé entre la poutre et le membre central. Elle est adhérisée vers l'intérieur à une bague centrale liée à la poutre, et vers l'extérieur au membre tubulaire. Elle permet un débattement limité en rotation du membre tubulaire par rapport à la poutre, autour d'un axe transversal. Quand le membre tubulaire est sollicité en rotation autour de l'axe transversal, cette sollicitation est transférée à la poutre par l'intermédiaire de l'organe élastique.

Le membre tubulaire transmet à son tour ce mouvement à l'âme de support et aux organes racleurs.

Ce mécanisme permet d'ajuster la pression des organes racleurs contre la bande transporteuse. Il permet également de maintenir les plaquettes d'usure au contact de la bande transporteuse au fur et à mesure que les plaquettes d'usure s'usent.

Le montant comprend typiquement un berceau ayant une surface de réception du membre tubulaire. Cette surface est placée verticalement entre les deux parties d'extrémités du feuillard et entre les deux liaisons des parties d'extrémités du feuillard au montant. Le feuillard sollicite donc le membre tubulaire contre ladite surface. La surface est arquée et épouse une partie de la périphérie du membre tubulaire.

Ladite surface supporte donc verticalement le poids de l'âme de support, des organes racleurs et du matériau élastique, tout en permettant un léger glissement du membre tubulaire par rapport au montant, de manière à permettre un débattement en rotation du membre tubulaire au retour de l'axe transversal.

Un tel mécanisme permet à la fois de supporter le sous-ensemble formé de l'âme, du ou des organes racleurs et du matériau élastique, et de solliciter ce sous-ensemble en rotation autour d'un axe transversal contre la bande transporteuse. Ce mécanisme est particulièrement compact, et présente ainsi un encombrement réduit. Ceci est particulièrement important quand le dispositif racleur est situé dans une zone encombrée. Par ailleurs, le réglage de l'intensité de la sollicitation des organes racleurs contre la bande peut être effectué de manière particulièrement commode.

Typiquement, chaque liaison réglable est du type vis et écrou. Toutefois, la liaison pourrait être de tout autre type adapté.

Le matériau élastique surmoulé sur le ou les organes racleurs comprend typiquement du polyuréthane. Le polyuréthane est particulièrement adapté car il peut être surmoulé à pression atmosphérique. Toutefois, le matériau élastique pourrait être d'un autre type, par exemple un caoutchouc naturel ou synthétique tel qu'un élastomère.

Selon un second aspect, l'invention porte sur un procédé de fabrication d'un dispositif racleur pour bande transporteuse circulant longitudinalement d'une direction amont vers une direction aval, le dispositif comprenant :
- une structure porteuse ;
- au moins un organe racleur délimité vers l'amont et l'aval dans des côtés amont et aval ;
- le procédé comprenant une étape de surmoulage d'un matériau élastique sur l'organe racleur, le matériau élastique liant l'organe racleur à la structure porteuse ;
caractérisé en ce que le côté amont de l'organe racleur est couvert par le matériau élastique surmoulé.

De préférence, le matériau élastique est surmoulé sur l'âme de support de la structure porteuse, au cours de ladite étape de surmoulage du matériau élastique sur l'organe racleur.

D'autres caractéristiques et avantages de l'invention ressortiront de la description détaillée qui en est donnée ci-dessous, à titre indicatif et nullement limitatif, en référence aux figures annexées, parmi lesquelles :
- la Figure 1 est une vue de dessus d'un dispositif racleur conforme à l'invention ;
- la Figure 2 est une vue en perspective du dispositif de la Figure 1 ;
- la Figure 3 est une vue en coupe considérée suivant l'incidence des flèches III de la Figure 1 ; et
- la Figure 4 est une vue en perspective, agrandie, d'une partie du dispositif de la Figure 1, montrant plus particulièrement le mécanisme permettant de solliciter les organes racleurs contre la bande transporteuse.

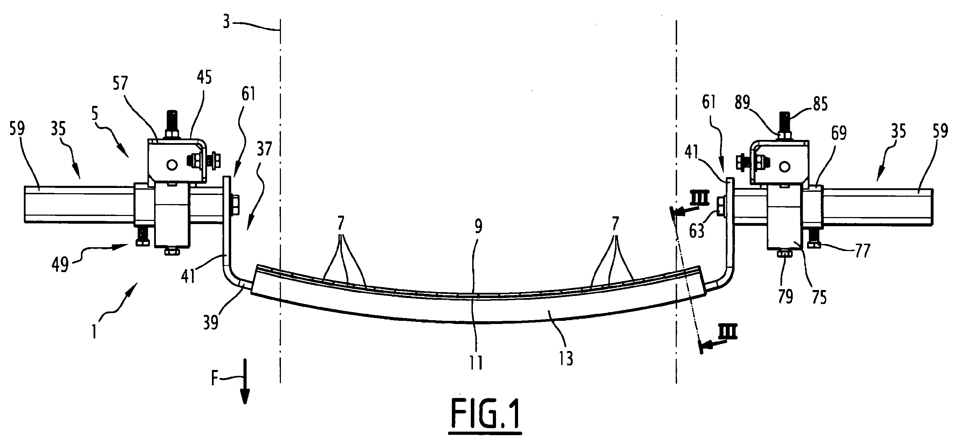

Le dispositif racleur 1 représenté sur les Figures 1 à 4 est destiné à racler la surface d'une bande transporteuse 3, visible notamment sur la Figure 1. Elle est destinée à éliminer les résidus de matériaux transportés se trouvant encore sur la bande transporteuse après déchargement de celle-ci.

Typiquement, la bande transporteuse est agencée en boucle entre deux rouleaux de retournement, et comporte un brin de transport et un brin de retour. Le brin de transport est chargé en matériau à transporter à proximité d'un premier rouleau de retournement. Le matériau est déchargé de la bande transporteuse à proximité du second rouleau de retournement. Le dispositif racleur est disposé de manière à racler le brin de retour, immédiatement en aval du second rouleau de retournement.

Dans la présente description les termes amont et aval sont entendus relativement au sens de déplacement de la bande transporteuse.

La face de la bande recevant les matériaux est par exemple tournée vers le haut le long du brin de transport, et est tournée vers le bas le long du brin de retour, au moins au niveau du dispositif racleur. Le dispositif de racleur est donc placé sous le brin de retour de la bande transporteuse.

Il est à noter que le brin de retour de la bande transporteuse peut être utilisé lui aussi pour transporter des matériaux.

Sur la Figure 1, le sens de circulation de la bande transporteuse de l'amont vers l'aval est représenté par la flèche F.

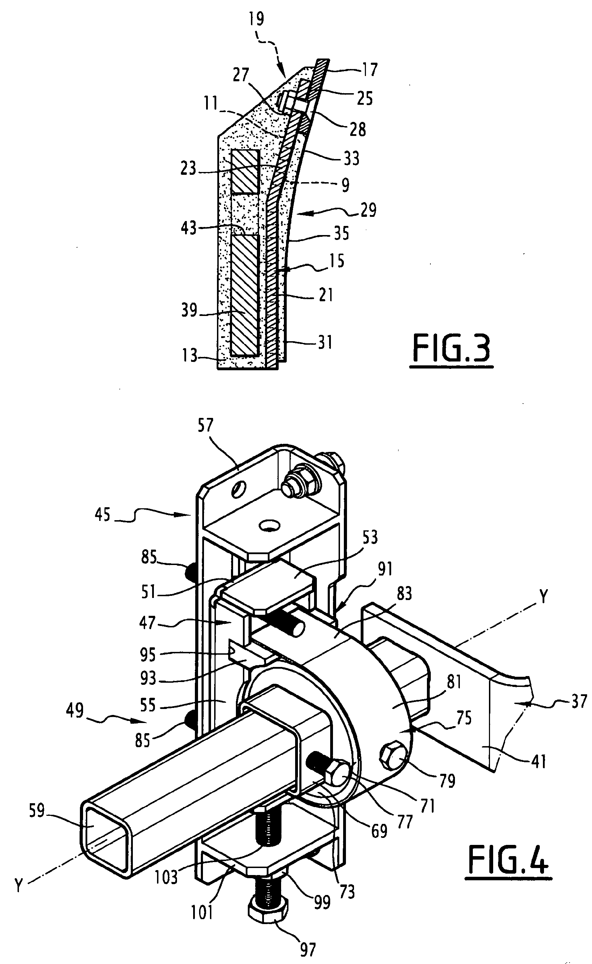

Le dispositif 1 comprend :
- une structure porteuse 5 ;
- plusieurs organes racleurs 7 délimités vers l'amont et l'aval par des côtés amont et aval 9 et 11 (Figure 3) ;
- un matériau élastique 13 surmoulé sur ces organes racleurs 7 et liant les organes racleurs 7 à la structure porteuse 5.

Chaque organe racleur comporte, comme visible sur la Figure 3, une plaque de support 15, une plaquette d'usure 17, et une liaison démontable 19 de la plaquette d'usure 17 à la plaque de support 15.

La plaque de support 15 est une plaque métallique, d'orientation sensiblement verticale et transversale. Elle comporte une partie inférieure 21 sensiblement plane, une partie supérieure 23 sensiblement plane, les parties inférieure et supérieure étant dans des plans inclinés l'un par rapport à l'autre. La partie 23 prolonge la partie 21 vers le haut et dans la direction amont. L'angle entre les parties 21 et 23 vaut environ 170°.

La plaquette d'usure 17 est plaquée contre un côté de la plaque de support 15 tournée vers l'amont. Elle est plaquée contre une zone de bord supérieur de la plaque de support 15, référencée 25. La liaison démontable 19 comprend un écrou 27 et une vis 28. La plaquette d'usure 17 et la plaque de support 15 comporte des orifices respectifs placés en coïncidence l'un avec l'autre. L'écrou 27 est soudé à la plaque de support 15, et disposé sur une face de la plaque de support 15 tourné vers l'aval. Il est placé en coïncidence avec l'orifice de la plaque. La vis 28 est engagée à travers les deux orifices et est en prise avec l'écrou 27.

Le matériau élastique 13 est un polyuréthane. Le matériau élastique forme un bloc venu de moulage. Tous les organes racleurs 7 sont noyés dans le matériau élastique et sont ainsi liés les uns aux autres par le matériau élastique 13. Plus précisément, comme visible sur la Figure 3, la plaque 15 de chacun des organes racleurs est noyée dans le matériau élastique 13. La plaquette d'usure 17 fait saillie vers le haut par rapport au matériau élastique 13. Le côté amont 11 de l'organe racleur est partiellement couvert par le matériau élastique surmoulé. Le côté aval 11 est pratiquement entièrement couvert par le matériau élastique surmoulé.

Du côté amont, le matériau élastique 13 couvre sensiblement toute la face amont de la plaque de support 15, à l'exception de la zone de bord supérieur 25 contre laquelle est plaquée la plaquette d'usure 17. Du côté aval, toute la plaque de support 15 est couverte par le matériau élastique.

Du côté aval, la plaquette d'usure 17 n'est pas du tout couverte par le matériau élastique.

Le matériau élastique définit vers l'amont une face amont libre 29, conformée pour faciliter l'évacuation des résidus détachés de la bande transporteuse par la plaquette d'usure 17.

La face amont 29 présente une courbure autour d'un axe sensiblement horizontal et transversal. Plus précisément, elle présente une zone inférieure 31 sensiblement plane s'étendant sur toute la largeur transversale du bloc de matériau élastique, une zone supérieure 33 sensiblement plane s'étendant elle aussi sur toute la largeur du bloc de matériau élastique, et une zone de jonction raccordant les zones 31 et 33 l'une à l'autre. La zone de jonction est une ligne ou une zone présentant une courbure autour d'un axe horizontal. La zone supérieure 33 est située au-dessus de la zone inférieure 31. Elle s'étend vers le haut et vers l'amont à partir de la zone de jonction. Les zones inférieure et supérieure forment entre elles un angle valant sensiblement 170°.

La structure porteuse 5 comprend deux ensembles de support 35 disposés de part et d'autre transversalement de la bande transporteuse, et une âme 37 de support des organes racleurs.

L'âme de support 37 comporte une partie centrale arquée 39, sensiblement transversale, prolongée par deux extrémités 41 d'orientation sensiblement longitudinale. L'âme 37 est une plaque métallique disposée sensiblement verticalement. La partie arquée 39 présente une concavité tournée vers l'amont. Elle est noyée dans le matériau élastique surmoulé 13. Comme le montre la Figure 3, elle est entièrement enveloppée par le matériau élastique, et présente des trous 43 permettant de solidariser l'une à l'autre les masses de matériau élastique situées d'un côté et de l'autre de l'âme de support.

Chaque ensemble de support 35 comporte, comme visible notamment sur la Figure 4, un montant fixe 45, un coulisseau 47 réglable en position verticalement par rapport au montant 45, et un mécanisme 49 prévu pour déplacer l'âme de support 37 en rotation par rapport au montant 45 autour d'un axe sensiblement transversal, référencé Y sur la Figure 4.

Le montant fixe 45 est par exemple un profilé en L d'orientation verticale, rigidement fixé à une structure reposant sur le sol. La structure n'est pas représentée.

Le coulisseau 47 est une pièce creuse de forme sensiblement parallélépipédique. Elle comporte un fond 51 et quatre parois 53, 55 rigidement fixées au fond et perpendiculaires à celui-ci. Les parois 53 sont parallèles et opposées l'une à l'autre. Les parois 55 sont parallèles et opposées l'une à l'autre, et sont perpendiculaires aux parois 53. Le fond 51 est plaqué contre une aile 57 du montant. Le coulisseau 47 est ouvert à l'opposé du fond 51.

Chaque ensemble de support comprend encore une poutre creuse transversale 59, et une liaison démontable 61 de la poutre creuse à l'âme de support 37. La poutre creuse 59 est à section sensiblement carrée.

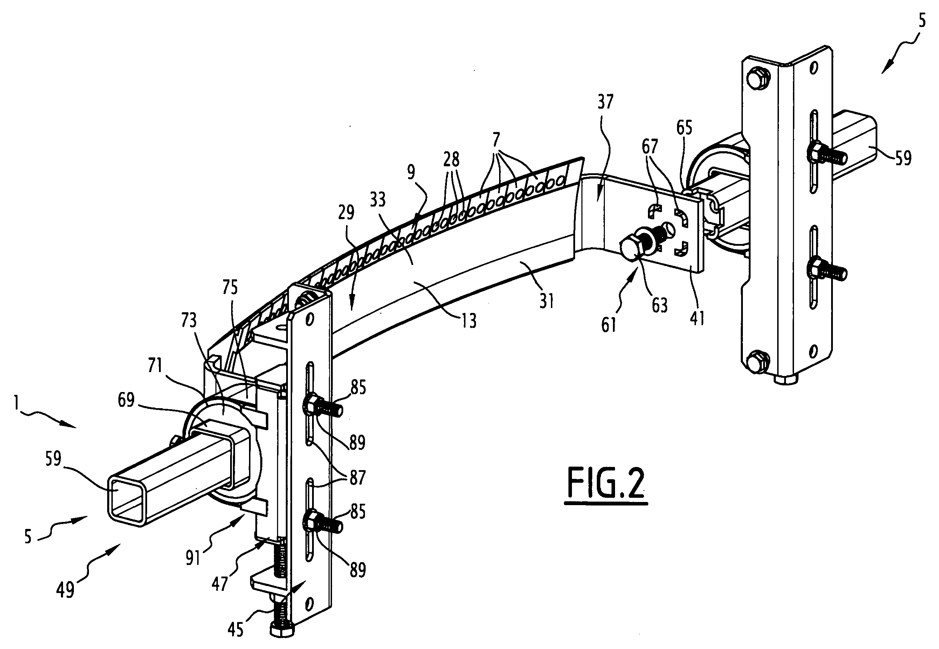

La liaison 61 lie une extrémité de la poutre 59 à la partie d'extrémité 41 de l'âme de support située du côté de l'ensemble de support correspondant. La liaison 61 comprend, comme visible sur la Figure 2, un ensemble vis- écrou 63, et des reliefs 65 ménagés sur la poutre 59 et engagés dans des orifices 67 ménagés sur l'âme de support. L'écrou de l'ensemble vis-écrou 65 n'est pas visible sur la Figure 2. Il est par exemple soudé sur une cloison interne de la poutre 59. Les reliefs 65 sont par exemple ménagés sur le bord libre de la poutre 59 et font saillis vers la partie d'extrémités 41 de l'âme de support. Chacun présente par exemple une forme en L. Les orifices 67 sont eux aussi de forme en L et traversent l'âme sur toute son épaisseur. La liaison 61 solidarise en rotation autour de l'axe transversal la poutre 59 et l'âme de support 37.

Le mécanisme 49 comprend encore, comme visible sur la Figure 4, un membre central 69, un membre tubulaire 71 disposé autour du membre central 69, un organe élastique 73 liant le membre central et le membre tubulaire l'un à l'autre, et un feuillard 75 s'enroulant autour du membre tubulaire 71. Le membre central 69 est une bague métallique à section sensiblement carrée, enfilée autour de la poutre 59. Une vis 77 permet de bloquer en translation transversalement la poutre 59 à l'intérieur du membre 69. Il est ainsi possible d'ajuster la position de la poutre 59 suivant la direction transversale par rapport au membre central 69.

Le membre tubulaire 71 présente une forme générale cylindrique d'axe central transversal. L'organe élastique 73 est un bloc de polyuréthane, adhérisé vers l'intérieur sur une surface externe du membre central 69, et adhérisé vers l'extérieur sur une surface interne du membre tubulaire 71.

Le feuillard 65 est une bande souple d'un matériau métallique. Elle est rigidement fixée au membre tubulaire 71 par une vis 79. Le feuillard 75 présente une forme générale en U. Il présente une partie centrale 81 sensiblement semi-circulaire plaquée contre une surface externe du membre tubulaire 71, prolongé par deux parties d'extrémités 83, sensiblement planes et parallèles l'une à l'autre. La partie centrale 81 est plaquée contre une zone de la surface externe du membre tubulaire 71 opposée au montant fixe 45. Deux tiges filetées 85 sont soudées aux parties d'extrémités 83. Les tiges filetées 85 sont engagées dans des fentes 87 ménagées dans l'aile 57 du montant (figure 2). Les fentes 87 sont d'orientation verticale. Des écrous 89 sont vissés sur les tiges filetées 85. Les écrous 89 portent par l'intermédiaire de rondelles contre une face de l'aile 57 opposée au feuillard 75.

L'ensemble de support 35 comporte encore un berceau 91, en polyéthylène, destiné au support du membre tubulaire 71. Le berceau 91 est engagé à l'intérieur du coulisseau 47. Il est rigidement fixé par rapport au coulisseau 47, par exemple par des parties 93 engagées en force dans des créneaux 95 découpés dans les parois 55. Le berceau 91 présente vers le membre tubulaire une surface arquée, de courbure correspondant sensiblement à la courbure de la surface externe du membre tubulaire 71. Cette surface n'est pas visible sur la Figure 4.

Les parties d'extrémité 83 du feuillard sont plaquées contre ce berceau 91, l'une au-dessus et l'autre au-dessous du berceau 91. Le berceau 91 sert donc d'entretoise et maintient un écartement vertical déterminé entre les deux parties d'extrémité 83 du feuillard 75.

Le membre tubulaire 71 est sollicité contre cette surface de support par le feuillard 75. Ainsi, le membre tubulaire 71 est plaqué d'un côté contre la surface de support du berceau 91, et de l'autre côté par la partie centrale 81 du feuillard 75.

Enfin, de manière à permettre le réglage suivant la direction verticale de la position du coulisseau 47 par rapport au montant 45, l'ensemble de support comprend un dispositif vis et écrou 97, 99. Pour ce faire, il est prévu une plaque 101 solidaire du montant 45, sous le coulisseau 47. La plaque 101 est sensiblement horizontale et présente un orifice 103. L'écrou 99 est soudé sous la plaque 101, en coïncidence avec l'orifice 103. La vis 97 s'étend verticalement. Elle est vissée dans l'écrou 99, et son extrémité vient porter sur et contre la paroi 53 du coulisseau. Ainsi, en vissant ou en dévissant la vis 97, il est possible d'ajuster la position verticale du coulisseau 47 par rapport au montant 45. Du fait de ce mouvement, les tiges filetées 85 se déplacent le long des fentes 87.

Le fonctionnement du racleur décrit ci-dessus va maintenant être détaillé.

Les montants 45 sont fixés sur une structure rigide reposant sur le sol.

La position transversale de l'âme de support 37 par rapport au montant 35 est ajustable en déplaçant les poutres creuses 59 par rapport aux membres centraux 69 des deux ensembles de support. Une fois cette position transversale ajustée, on serre la vis 77, de manière à bloquer les poutres 59 transversalement par rapport aux montants 45.

Pour utiliser le dispositif racleur, on sollicite en rotation l'âme de support 37 autour de l'axe transversal Y, de manière que les plaquettes d'usure 17 viennent porter avec un couple déterminé contre la bande transporteuse 3. Pour ce faire, on visse par exemple l'écrou 89 situé le plus haut dans un sens tel que la tige filetée 85 tire l'extrémité correspondante 83 du feuillard vers le montant 45. Parallèlement, on peut faire tourner l'écrou 89 situé le plus bas en sens inverse. Ceci a pour effet que le feuillard 75 se déplace autour de l'axe Y dans le sens anti horaire sur la Figure 4. Le membre tubulaire 71 est ainsi entraîné en rotation autour de l'axe Y. Cette sollicitation est transmise par le matériau élastique 73 au membre central 69 et à la poutre 59. La poutre 59 est rigidement fixée à l'âme de support, et entraîne à son tour l'âme de support en rotation.

Le berceau 91 est en un matériau choisi pour permettre le glissement du membre tubulaire 71 contre la surface de support.

Quand il est nécessaire de changer les plaquettes d'usure, on effectue le mouvement inverse. L'écrou supérieur 89 est tourné dans un sens tel que l'extrémité 83 correspondante du feuillard est déplacée dans le sens d'un écartement par rapport au montant 45, et l'écrou inférieur 89 dans le sens inverse. On écarte ainsi les plaquettes d'usure de la bande. Les vis 28 sont ensuite dévissées et les plaquettes 17 sont séparées des plaques 15.

De nouvelles plaquettes peuvent ensuite être mises en place et les vis 28 sont revissés dans les écrous 27.

## Revendications

1. Dispositif racleur pour bande transporteuse (3) circulant longitudinalement d'une direction amont vers une direction aval, le dispositif (1) comprenant :
- une structure porteuse (5), comprenant une âme de support (37), deux ensembles de support (35) prévus pour être disposés transversalement de part et d'autre de la bande transporteuse (3), et deux liaisons démontables (61) de deux parties d'extrémités (41) de l'âme de support (37) aux deux ensembles de support (35), chaque ensemble de support (35) comprenant un montant fixe (45) et un mécanisme (49) prévu pour déplacer l'âme de support (37) en rotation par rapport au montant (45) autour d'un axe sensiblement transversal, le mécanisme (49) comprenant une poutre (59) rigidement liée à l'âme de support (37) ;
- au moins un organe racleur (7) délimité vers l'amont et l'aval par des côtés amont (9) et aval (11) ;
- un matériau élastique (13) surmoulé sur l'organe racleur (7) et liant l'organe racleur (7) à la structure porteuse (5) ;
**caractérisé en ce que** le côté amont (9) de l'organe racleur (7) est couvert par le matériau élastique surmoulé (13), le matériau élastique (13) étant également surmoulé autour de l'âme de support (37), **en ce que** le mécanisme (49) comprend :
- un feuillard (75) lié à la poutre (59) et s'enroulant autour de la poutre (59), le feuillard (75) ayant deux parties d'extrémités (83) opposées l'une à l'autre ;
- deux liaisons liant chacune une des deux parties d'extrémité (83) du feuillard (75) au montant (45) correspondant, au moins une des deux liaisons étant réglable et étant agencée pour entrainer la poutre (59) en rotation autour de l'axe transversal par rapport au montant (45) par l'intermédiaire du feuillard (75).

2. Dispositif selon la revendication 1, **caractérisé en ce que** le matériau élastique surmoulé (13) sur le côté amont (9) de l'organe racleur (7) présente une face amont libre (29), ladite face amont (29) présentant une courbure autour d'un axe sensiblement horizontal et transversal.

3. Dispositif selon la revendication 2, **caractérisé en ce que** la face amont (29) présente au moins une zone inférieure (31) et une zone supérieure (33) située au dessus de la zone inférieure (31), les zones inférieure et supérieure (31, 33) formant entre elles un angle compris entre 100° et 175°.

4. Dispositif selon l'une quelconque des revendications précédentes, **caractérisé en ce que** l'organe racleur (7) comporte une plaque de support (15) noyé dans le matériau élastique (13), une plaquette d'usure (17) et une liaison (19) démontable de la plaquette d'usure (17) à la plaque de support (15).

5. Dispositif selon la revendication 4, **caractérisé en ce que** la plaque de support (15) présente une courbure autour d'un axe sensiblement horizontal et transversal.

6. Dispositif selon l'une quelconque des revendications précédentes, **caractérisé en ce que** ledit mécanisme (49) comprend :
- un membre tubulaire (71) lié à la poutre (59) et disposé autour de la poutre (59) ;
- un organe élastique (73) liant la poutre (59) et le membre tubulaire (71) l'un à l'autre ;
le feuillard (75) sollicitant le membre tubulaire (71) contre le montant (45), la poutre (59) étant liée au montant (45) seulement par l'intermédiaire du membre tubulaire et du feuillard (75).

7. Procédé de fabrication d'un dispositif racleur (1) selon l'une quelconque des revendications précédentes, le procédé comprenant une étape de surmoulage d'un matériau élastique (13) sur l'organe racleur (7), le matériau élastique (13) liant l'organe racleur (7) à la structure porteuse (5), le côté amont (9) de l'organe racleur (7) étant couvert par le matériau élastique surmoulé (13).

## Patentansprüche

1. Abstreif-Vorrichtung für ein Transportband (3), das sich longitudinal von einer Stromaufwärtsrichtung zu einer Stromabwärtsrichtung bewegt, wobei die Vorrichtung (1) aufweist:
- eine Trägerstruktur (5), die aufweist einen Haltesteg (37), zwei Halteeinrichtungen (35), die dazu vorgesehen sind, um quer beiderseits des Transportbands (3) angeordnet zu sein, und zwei demontierbare Verbindungen (61) von zwei Endabschnitten (41) des Haltestegs (37) mit den zwei Halteeinrichtungen (35), wobei jede Halteeinrichtung (35) einen feststehenden Pfosten (45) und einen Mechanismus (49) aufweist, der dazu vorgesehen ist, um den Haltesteg (37) bezüglich des Pfostens (45) um eine im Wesentlichen querverlaufende Achse dreh-zu-verlagern, wobei der Mechanismus (49) aufweist einen starren Träger (59), der mit dem Haltesteg (37) verbunden ist,
- wenigstens ein Abstreiforgan (7), das nach stromaufwärtsseitig und nach stromabwärtsseitig durch eine Stromaufwärtsseite (9) und eine Stromabwärtsseite (11) begrenzt ist,
- ein elastisches Material (13), welches auf das Abstreiforgan (7) auf-geformt ist und welches das Abstreiforgan (7) mit der Trägerstruktur (5) verbindet,
**dadurch gekennzeichnet, dass** die Stromaufwärtsseite (9) des Abstreiforgans (7) von dem auf-geformten elastischen Material (13) bedeckt ist, wobei das elastische Material (13) auch um den Haltesteg (37) herum auf-geformt ist, und dadurch, dass der Mechanismus (49) aufweist:
- ein Band (75), das mit dem Träger (59) verbunden ist und um den Träger (59) herumgeschlungen ist, wobei das Band (75) zwei einander gegenüberliegende Endabschnitte (83) aufweist,
- zwei Verbindungen, die jeweilig einen der beiden Endabschnitte (83) des Bands (75) mit dem korrespondierenden Pfosten (45) verbinden, wobei wenigstens eine der beiden Verbindungen verstellbar ist und eingerichtet ist, um den Träger (59) bezüglich des Pfostens (45) um die querverlaufende Achse herum in Rotation mitzunehmen durch Zwischenwirkung des Bands (75).

2. Vorrichtung gemäß Anspruch 1, **dadurch gekennzeichnet, dass** das elastische auf-geformte Material (13) auf der Stromaufwärtsseite (9) des Abstreiforgans (7) eine freie stromaufwärtsseitige Fläche (29) aufweist, wobei die stromaufwärtsseitige Fläche (29) eine Krümmung um eine im Wesentlichen horizontale und querverlaufende Achse hat.

3. Vorrichtung gemäß Anspruch 2, **dadurch gekennzeichnet, dass** die stromaufwärtsseitige Fläche (29) wenigstens einen unteren Bereich (31) und einen oberen Bereich (33) hat, der über dem unteren Bereich (31) angeordnet ist, wobei der untere und der obere Bereich (31, 33) zwischen sich einen Winkel einschließen, der zwischen 100° und 175° beträgt.

4. Vorrichtung gemäß irgendeinem der vorhergehenden Ansprüche, **dadurch gekennzeichnet, dass** das Abstreiforgan (7) aufweist eine Stützplatte (15), die in das elastische Material (13) eingebettet ist, eine Verschleißplatte (17) und eine demontierbare Verbindung (19) der Verschleißplatte (17) mit der Stützplatte (15).

5. Vorrichtung gemäß Anspruch 4, **dadurch gekennzeichnet, dass** die Stützplatte (15) eine Krümmung um eine im Wesentlichen horizontale und querverlaufende Achse hat.

6. Vorrichtung gemäß irgendeinem der vorhergehenden Ansprüche, **dadurch gekennzeichnet, dass** der besagte Mechanismus (49) aufweist:
- ein rohrförmiges Element (71), das mit dem Träger (59) verbunden ist und das um den Träger (59) herum angeordnet ist,
- ein elastisches Organ (73), das den Träger (59) und das rohrförmige Element (71) miteinander verbindet,
wobei das Band (75) das rohrförmige Element (71) gegen den Pfosten (45) festlegt, wobei der Träger (59) mit dem Pfosten (45) verbunden ist nur durch die Zwischenwirkung des rohrförmigen Elements und des Bands (75).

7. Verfahren zur Herstellung einer Abstreifvorrichtung (1) gemäß irgendeinem der vorhergehenden Ansprüche, wobei das Verfahren aufweist einen Schritt des Auf-Formens eines elastischen Materials (13) auf das Abstreiforgan (7), wobei das elastische Material (13) das Abstreiforgan (7) mit der Trägerstruktur (5) verbindet, wobei die Stromaufwärtsseite (9) des Abstreiforgans (7) von dem auf-geformten elastischen Material (13) bedeckt ist.

## Claims

1. A scraping device for a transporting belt (3) traveling longitudinally from an upstream direction toward a downstream direction, the device (1) comprising:
- a supporting structure (5), comprising a support core (37), two support subassemblies (35) provided to be positioned transversely on either side of the transporting band (3), and two separable connections (61) of two end parts (41) of the support core (37) to the two support assemblies (35), each support assembly (35) includes a stationary post (45) and a mechanism (49) provided to bias the support core (37) in rotation relative to the post (45) around a substantially transverse axis, the mechanism (49) including a beam (59) rigidly connected to the support core (37);
- at least one scraping member (7) upwardly and downwardly delimited by upstream (9) and downstream (11) sides;
- an elastic material (13) that is overmolded on the scraping member (7) and connecting the scraping member (7) to the supporting structure (5);
**characterized in that** the upstream side (9) of the scraping member (7) is covered with the overmolded elastic material (13), the overmolded elastic material (13) being also overmolded around the support core (37), and **in that** the mechanism (49) comprises:
- a strapping (75) connected to the beam (59) and winding around the beam (59), the strapping (75) having two end parts (83) opposite one another;
- two connections each connecting one of the two end parts (83) of the strapping (75) to the corresponding post (45), at least one of the two connections being adjustable and being arranged to rotate the beam (59) around the central axis relative to the post (45) using the strapping (75).

2. The device according to claim 1, **characterized in that** the overmolded elastic material (13) on the upstream side (9) of the scraping member (7) has a free upstream face (29), said upstream face (29) having a curvature around a substantially horizontal and transverse axis.

3. The device according to claim 2, **characterized in that** the upstream face (29) has at least one lower zone (31) and one upper zone (33) situated above the lower zone (31), the lower and upper zones (31, 33) forming an angle comprised between 100° and 175°.

4. The device according to any one of the preceding claims, **characterized in that** the scraping member (7) includes a support plate (15) embedded in the elastic material (13), a wear pad (17) and a separable connection (19) of the wear pad (17) to the support plate (15).

5. The device according to claim 4, **characterized in that** the support plate (15) has a curvature around a substantially horizontal and transverse axis.

6. The device according to any one of the preceding claims, **characterized in that** said mechanism (49) comprises:
- a tubular limb (71) connected to the beam (59) and positioned around the beam (59);
- an elastic member (73) connecting the beam (59) and the tubular limb (71) to each other;
the strapping (75) biasing the tubular limb (71) against the post (45), the beam (59) being connected to the post (45) only by means of the tubular limb and the strapping (75).

7. A method for manufacturing a scraping device (1) according to any one of the preceding claims, the method comprising a step for overmolding an elastic material (13) on the scraping member (7), the elastic material (13) connecting the scraping member (7) to the supporting structure (5), the upstream side (9) of the scraping member (7) being covered by the overmolded elastic material (13).
